Europäisches Patentamt

European Patent Office

Office européen des brevets

(19)

(11) Veröffentlichungsnummer: **0 254 894 B1**

(12) # EUROPÄISCHE PATENTSCHRIFT

(45) Veröffentlichungstag der Patentschrift: **22.01.92**

(51) Int. Cl.⁵: **H04N 9/29,** //H01R9/07

(21) Anmeldenummer: **87109450.4**

(22) Anmeldetag: **01.07.87**

(54) Entmagnetisierungseinrichtung für eine Farbfernsehbildröhre.

(30) Priorität: **26.07.86 DE 3625383**

(43) Veröffentlichungstag der Anmeldung:
**03.02.88 Patentblatt 88/05**

(45) Bekanntmachung des Hinweises auf die
Patenterteilung:
**22.01.92 Patentblatt 92/04**

(84) Benannte Vertragsstaaten:
**DE FR GB IT**

(56) Entgegenhaltungen:
**AT-B- 261 692**
**DE-A- 3 000 335**
**DE-A- 3 228 661**
**DE-B- 2 319 262**
**US-A- 2 898 509**

(73) Patentinhaber: **GRUNDIG E.M.V. Elektro-**
**Mechanische Versuchsanstalt Max Grundig**
**holländ. Stiftung & Co. KG.**
**Kurgartenstrasse 37**
**W-8510 Fürth/Bay.(DE)**

(72) Erfinder: **Rohrbacher, Josef, Dipl.-Ing.**
**Grundig E.M.V. Kurgartenstrasse 37**
**W-8510 Fürth/Bay(DE)**

## Beschreibung

Die Erfindung betrifft eine Entmagnetisierungseinrichtung für eine Farbfernsehbildröhre, deren rückwärtiger Teil aus einem zylinderförmigen Kegel besteht, dessen weitester Teil sich an der Vorderseite befindet und der stirnseitig den Bildschirm bildet, wobei eine den Röhrenhals umschlingende und bis nahe der vorderen Begrenzung der Kegeloberfläche sich schleifenförmig erstreckende Entmagnetisierungsspule in Form eines Wickelstranges um den Kegelstumpf der Bildröhre gelegt ist.

Es ist beispielsweise aus der DE 30 05 763 C2 und der DE-AS 23 19 262 bekannt, Entmagnetisierungseinrichtungen an einer Farbfernsehbildröhre vorzusehen, um die Bildröhre gegen Einflüsse des Erdmagnetfeldes zu schützen. Das Erdmagnetfeld lenkt die Elektronenstrahlen in der Bildröhre von ihrem vorgesehenen Verlauf ab, so daß sich der scheinbare Ausgangspunkt der Elektronenstrahlen und deren Richtung beim Eintreffen an der Schattenmaske in Abhängigkeit von der Orientierung der Bildröhre zum Erdmagnetfeld ändern, wodurch die Farbreinheit beeinträchtigt wird. Zur Vermeidung derartiger Beeinträchtigungen sind Abschirmungen und Entmagnetisierungsspulen an und in der Bildröhre vorgesehen. Die erforderlichen Entmagnetisierungsspulen sind als Wickelstrang auf einem relativ großen Wickelkörper gewickelt, und die so entstandene Wicklung wird zusätzlich mit einem isolierenden Band oder Schlauch umwickelt bzw. umgeben. Eine als Entmagnetisierungsspule so hergestellter Spulenstrang wird in einer bestimmten Anordnung um den Kegelstumpf der Bildröhre gelegt. Bei Bildröhren mit großen Schirmabmessungen und großen Ablenkwinkeln ist es wichtig, daß die Entmagnetisierungsspule oder -spulen einen möglichst großen Teil der Kegeloberfläche umfassen. Das Herstellungsverfahren von Entmagnetisierungsspulen in der geschilderten Art ist aufwendig und nicht ausreichend flächenabdeckend.

Aufgabe der Erfindung ist es, eine Entmagnetisierungseinrichtung für eine Farbfernsehbildröhre zu schaffen, bei der die Entmagnetisierungsspulen ohne einen kostenaufwendigen Wickelaufwand herzustellen sind und gleichzeitig den erforderlichen rückwärtigen Teil der Bildröhre möglichst flächig überdeckt.

Diese Aufgabe wird erfindungsgemäß durch die kennzeichnenden Merkmale des Patentanspruchs 1 gelöst.

Einzelheiten der Erfindung werden im folgenden anhand der Zeichnungen erläutert.

Fig. 1    ist eine perspektivische Darstellung der Rückseite einer Farbfernsehbildröhre mit aufgelegter Entmagnetisierungsspule,

Fig. 2    ist eine Draufsicht auf einen Spulenabschnitt in Form einer Flachbandleitung,

Fig. 3    ist ein Querschnitt einer Flachbandleitung nach Fig. 2,

Fig. 4    ist ein Querschnitt einer modifizierten Ausführung einer Flachbandleitung,

Fig. 5    ist ein Querschnitt durch zwei übereinander angeordneten Wicklungen einer Flachbandleitung nach Fig. 4,

Fig. 6    ist eine schematische Draufsicht auf ein Klemmteil zum Verbinden zweier Enden einer Flachbandleitung und

Fig. 7    ist eine schematische Draufsicht auf ein Klemmteil nach Fig. 6 jedoch mit aufgeklappten Gehäuseteilen.

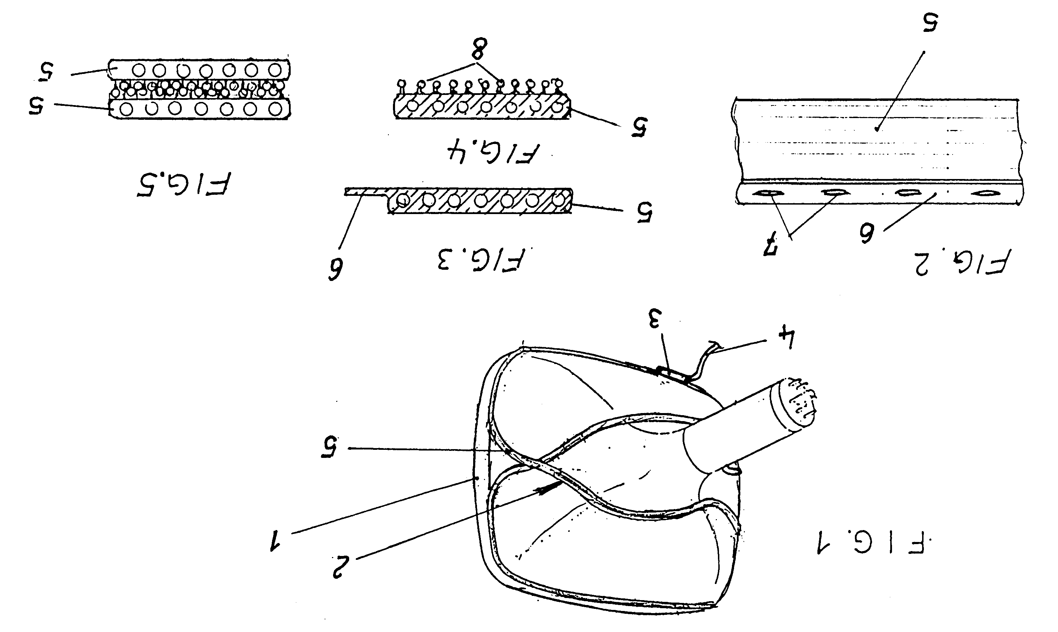

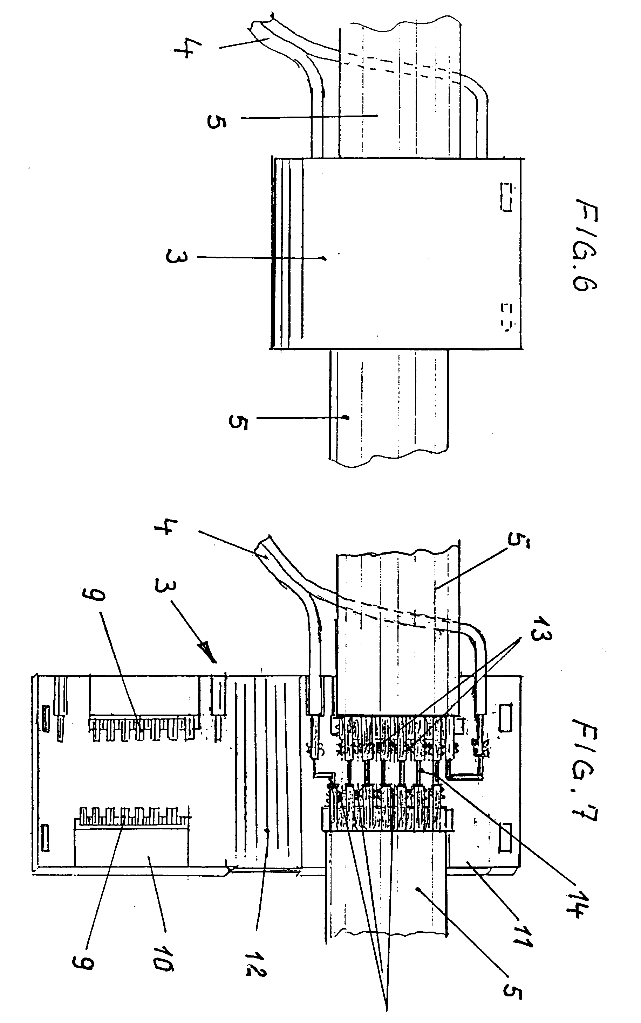

Die Figur 1 zeigt in perspektivischer Darstellung die Rückseite einer Farbfernsehbildröhre 1 mit einer aufgelegten Magnetisierungsspule 2 und einem Klemmteil 3 mit einer Anschlußleitung 4 für den Spulenanfang und das Spulenende. Die Entmagnetisierungsspule ist hierbei aus einer Flachbandleitung 5 hergestellt. Ein Abschnitt der Flachbandleitung 5 ist in Figur 2 dargestellt, wobei die Flachbandleitung in bekannter Weise von einem Kunststoffmantel umgeben ist, und die nebeneinander angereihten Leiter aus einem Runddraht, einem Flachdraht oder aus einer Litze bestehen und einfach oder doppelt isoliert sein können. An einer oder an beiden Längsseiten ist ein einstückig an die Flachbandleitung mitangespritztes Kunststoffband 6 angebracht. Das Kunststoffband weist in fortlaufenden Abständen knopflochartige Durchbrüche 7 auf. Über diese Durchbrüche kann die Flachbandleitung auf im Bildröhrenrahmen angespritzte pilsförmige Knöpfe aufgesetzt und lagenfixiert gehalten werden.

Die Figur 3 zeigt einen Querschnitt durch die Flachbandleitung 5 mit angespritztem Kunststoffband 6. Ein weiteres Beispiel einer besonders ausgebildeten Flachbandleitung ist aus der Querschnittszeichnung nach Figur 4 zu erkennen. Eine Flachseite der Flachbandleitung weist kleine auf Stege sitzende Rastnoppen 8 auf, über die zwei Bahnen von Flachbandleitungen wie nach Figur 5 dargestellt haftend miteinander zu verbinden sind. Ist es gewünscht, mehrere Leitungen übereinander anzubringen, so sind die Flachbandleitungen beidseitig mit derartigen Rastnoppen versehen. Möglich sind auch andere Befestigungsarten, z. B. eine Befestigung über einen auf der Flachseite der Flachbandleitung einseitig oder beidseitig aufgebrachten Klebestreifen.

Die Figur 6 zeigt eine schematische Draufsicht auf ein Klemmteil 3, das die beiden Enden einer Flachbandleitung 5 miteinander verbindet. Die Leitungsenden sind hierbei derart elektrisch kontaktierend verbunden, daß sich eine mehrere Leiterwin-

2

dungen bildende Wickelspule in Form eines Wikkelstranges ergibt. Zu diesem Zweck wird das eine Ende der Flachbandleitung um einen Leiter versetzt mit dem anderen Ende der Flachbandleitung elektrisch verbunden. Die beiden freibleibenden Leiter bilden den Spulenanfang und das Spulenende und werden mit einer Anschlußleitung 4 verbunden.

Aus der Figur 7 ist im wesentlichen der innere Aufbau des Klemmteils 3 zu erkennen. Die einzelnen Elemente für die Kontaktierung der einzelnen Leiter der Flachbandleitung sind nur lagenmäßig angedeutet, da verschiedene Ausführungsmöglichkeiten für die sogenannten Schneidklemm-Anschlußkontakte 13 aus den bereits bekannten Anschlußelementen für Flachleitungen bekannt sind. Das Klemmteil 3 besteht aus einem Oberteil 12 und einem Unterteil 11, die über ein einstückig mit beiden Teilen aus Kunststoff gespritztes sogenanntes Filmscharnier 12 verbunden sind. Die Anschlußleitung 4 und die beiden Endabschnitte der Flachbandleitung 5 werden in das Unterteil 11 des Klemmteils 3 derart eingesetzt, daß sich der gewünschte Versatz beider Leitungen zwangsläufig ergibt. Die einzelnen gegenüberliegenden Schneidklemm-Anschlußkontakte sind im dargestellten Beispiel im Unterteil 11 angebracht und durch Leitungsstege 14 mit dem gegenüberliegenden Anschlußkontakt verbunden. Wird nun das Oberteil 10 auf das Unterteil 11 des Klemmteils 3 aufgedrückt, so dringen die Schneidklemm-Kontakte 13 in die Isolierung der Flachbandleitung 5 und der Anschlußleitung 4 eine und kontaktieren die einzelnen Leitungen. Für die richtige Lagenfixierung und zur Erzielung der erforderlichen Druckkomponente auf die einzelnen Leiter der Flachbandleitung weist das Oberteil 10 des Klemmteils 3 entsprechende Formeinsätze 9 auf. Das Klemmteil 3 kann verschiedenartigst ausgeführt und mit unterschiedlichen Anschlußkontakten versehen sein. Weiterhin ist es möglich, daß das Klemmteil 3 derart ausgebildet ist, daß mehrlagig angeordnete Flachbandleitungen gleichzeitig kontaktierbar sind. Es können für diesen Zweck mehrere Ober- und Unterteile des Klemmteils 3 über Filmscharniere verbunden sein und werden wechselseitig bestückt und übereinandergeklappt.

**Patentansprüche**

1. Entmagnetisierungseinrichtung für eine Farbfernsehbildröhe, deren rückwärtiger Teil aus einem zylinderförmigen Hals und deren vorderer Teil aus einem stumpfen Kegel besteht, dessen weitester Teil sich an der Vorderseite befindet und der stirnseitig den Bildschirm bildet, wobei eine den Röhrenhals umschlingende und bis nahe der vorderen Begrenzung der Kegeloberfläche sich schleifenförmig erstreckende Entmagnetisierungsspule in Form eines Wickelstranges um den Kegelstumpf der Bildröhre gelegt ist,
   **dadurch gekennzeichnet,** daß die Entmagnetisierungsspule (2) aus einer durch mehrere Einzelleitungen nebeneinander angeordneten Flachbandleitung (5) mit Kunststoffisoliermantel besteht, daß die Flachbandleitung ein- oder mehrlagig angeordnet ist, daß die jeweiligen Endabschnitte der Flachbandleitung (5) durch ein Klemmteil (3) verbunden sind, daß das Klemmteil (3) so ausgebildet ist, daß ein Leitungsende um einen Leiter gegenüber dem anderen Ende der Flachbandleitung versetzt ist und daß beide Endteile elektrisch kontaktierend verbunden, sowie die so entstehenden freien Enden der Flachbandleitung mit je einer Anschlußleitung kontaktiert sind, so daß ein mehrere geschlossene Leiterwindungen bildender Wickelstrang mit einem Spulenanfang und einem Spulenende gebildet ist.

2. Entmagnetisierungseinrichtung nach Anspruch 1,
   **dadurch gekennzeichnet,** daß die einzelnen Leiter der Flachbandleitung (5) als Einzeldraht oder als Drahtlitze mit einfacher oder doppelter Isolierung ausgeführt sind, und die Flachbandleitung einseitig oder beidseitig ein Kunststoffband (6) als Montagestreifen aufweist.

3. Entmagnetisierungseinrichtung nach Anspruch 2,
   **dadurch gekennzeichnet,** daß das als Montagestreifen ausgebildete Kunststoffband (6) in bestimmten Abständen knopflochartige Durchbrüche (7) aufweist, und das Kunststoffband (6) einstückig mit dem Mantel der Flachbandleitung verbunden ist.

4. Entmagnetisierungseinrichtung nach einem der bisherigen Ansprüche,
   **dadurch gekennzeichnet,** daß die Flachbandleitung (5) einseitig oder beidseitig auf der Flachseite eine Haftfläche aufweist.

5. Entmagnetisierungseinrichtung nach einem der bisherigen Ansprüche,
   **dadurch gekennzeichnet,** daß mehrere Flachbandleitungen übereinander angeordnet mit Hilfe der Haftfläche zu einem mehrlagigen Leitungsstrang zusammengefügt sind.

6. Entmagnetisierungseinrichtung nach einem der bisherigen Ansprüche,
   **dadurch gekennzeichnet,** daß die Flachbandleitung einseitig oder beidseitig an der Band-Flachseite Rastnoppen (8) in Form eines Art Klettenverschlusses aufweist.

7. Entmagnetisierungseinrichtung nach Anspruch 1, **dadurch gekennzeichnet,** daß das Klemmteil (3) aus einem Oberteil (10) und einem Unterteil (11) besteht, daß beide Teile einstückig mit einem Filmscharnier (12) verbunden und zusammenklappbar sind, daß wenigstens in einem der beiden Teile in bekannter Weise Schneidklemm-Anschlußkontakte (13) eingesetzt sind.

## Claims

1. Demagnetising device for a colour television picture tube, the rear part of which consists of a cylindrical neck and the front part of which consists of a blunted cone, the widest part of which is at the front and which forms the screen at its interface, a demagnetising coil in the form of a winding strand, encircling the tube neck and extending close to the front limitation of the cone surface in the form of a loop being placed around the blunted cone of the picture tube, characterised in that the demagnetising coil (2) consists of a ribbon cable (5) from several individual lines arranged next to one another, with plastic insulating sleeve, that the ribbon cable is arranged in one or more layers, that the respective end sections of the ribbon cable (5) are connected by a clamping part (3), that the clamping part (3) is constructed in such a manner that one cable end is offset by one conductor compared with the other end of the ribbon cable and that both end parts are connected in an electrically contacting manner and the free ends thus produced of the ribbon cable are brought into contact with one connecting line each so that a winding strand forming several closed conductor turns and comprising a coil start and a coil end is formed.

2. Demagnetising device according to Claim 1, characterised in that the individual conductors of the ribbon cable (5) are constructed as single wire or as stranded wire with single or double insulation and the ribbon cable exhibits on one side or on both sides a plastic tape (6) as mounting strip.

3. Demagnetising device according to Claim 2, characterised in that the plastic tape (6) constructed as mounting strip exhibits button-hole-like penetrations (7) at certain intervals and the plastic tape (6) is integrally joined to the sleeve of the ribbon cable.

4. Demagnetising device according to one of the previous claims, characterised in that the ribbon cable (5) exhibits an adhesive surface on the flat side on one side or on both sides.

5. Demagnetising device according to one of the previous claims, characterised in that several ribbon cables are joined together arranged on top of one another to form a multi-layer cable strand with the aid of the adhesive surface.

6. Demagnetising device according to one of the previous claims, characterised in that the ribbon cable exhibits on one side or on both sides interlocking knobs (8) in the form of a type of touch-and-close fastener on the flat side of the ribbon.

7. Demagnetising device according to Claim 1, characterised in that the clamping part (3) consists of an upper part (10) and a lower part (11), that both parts are integrally connected to a film hinge (12) and can be folded together, that insulation-piercing connecting contacts (13) are inserted in a known manner in at least one of the two parts.

## Revendications

1. Dispositif de démagnétisation pour un tube image en couleurs, dont la partie arrière est formée par un col cylindrique et dont la partie avant est formée par un cône tronqué, dont la partie la plus large est située sur la face avant et qui forme l'écran, sur sa face frontale, une bobine de démagnétisation, qui entoure le col du tube et s'étend sous la forme d'une boucle jusqu'à proximité de la limite avant de la surface du cône, étant apliquée sous la forme d'un faisceau d'enroulement autour du tronc de cône du tube image, caractérisé par le fait que la bobine de démagnétisation (2) est constituée par un conducteur en forme de bande plate (5) formé de plusieurs fils individuels disposés côte-à-côte et comportant une gaine isolante en matière plastique, que le conducteur en forme de bande plate est disposé suivant une couche ou plusieurs couches, que les sections d'extrémité respectives du conducteur en forme de bande plate (5) sont raccordées par un élément de connexion (3), que l'élément de connexion (3) est agencé de telle sorte qu'une extrémité du conducteur est décalée d'un fil par rapport à l'autre extrémité du conducteur en forme de bande plate, que les deux parties d'extrémité sont raccordées de manière à être en contact électrique et que les extrémités libres, ainsi obtenues, du conducteur en forme de bande plate sont placées en contact avec des fils respectifs de raccordement de manière à former un faisceau d'enroulement, constituant plusieurs spires fermées de fil et comportant un début et une fin de bobine.

2. Dispositif de démagnétisation selon la revendication 1, caractérisé en ce que les différents fils du conducteur en forme de bande plate (5) sont réalisés sous la forme d'un seul fil ou d'un toron possédant un isolant simple ou double et que le conducteur en forme de bande plate possède, d'un côté ou sur ses deux côtés, une bande de matière plastique (6) réalisée sous la forme d'une bande de montage.

3. Dispositif de démagnétisation selon la revendication 2, caractérisé en ce que la bande en matière plastique (6) réalisée sous la forme d'une bande de montage possède, à des intervalles déterminés, des ouvertures en forme de boutonnières (7), et que la bande en matière plastique (6) est raccordée d'un seul tenant à la gaine du conducteur en forme de bande plate.

4. Dispositif de démagnétisation selon l'une des revendications précédentes, caractérisé en ce que le conducteur en forme de bande plate possède, d'un côté ou sur ses deux côtés, une surface adhésive sur le côté plat.

5. Dispositif de démagnétisation selon l'une des revendications précédentes, caractérisé en ce que plusieurs conducteurs en forme de bandes plates sont réunis en étant superposés, au moyen de la surface adhésive, pour former un faisceau de conducteurs à plusieurs couches.

6. Dispositif de démagnétisation selon l'une des revendications précédentes, caractérisé en ce que le conducteur en forme de bande plate possède, d'un côté ou sur ses deux côtés, sur la face plane de la bande, des boutons d'encliquetage (8) à la manière d'une fermeture à ruban auto-accrochant.

7. Dispositif de démagnétisation selon la revendication 1, caractérisé en ce que la partie de connexion (3) est constituée d'une partie supérieure (10) et d'une partie inférieure (11), que ces deux parties sont réunies d'un seul tenant à une charnière en forme de pellicule (12) et peuvent être rabattues l'une sur l'autre, et que, de façon connue, des contacts de raccordement (13) d'une borne à déplacement d'isolant sont insérés dans au moins l'une des deux parties.

FIG. 1

FIG. 2

FIG. 3

FIG.4

FIG.5

FIG.6

FIG.7